Europäisches Patentamt

European Patent Office

Office européen des brevets

(19)

(11) Veröffentlichungsnummer: **0 062 703**
**B1**

(12) **EUROPÄISCHE PATENTSCHRIFT**

(45) Veröffentlichungstag der Patentschrift:
06.02.85

(21) Anmeldenummer: 81109459.8

(22) Anmeldetag: 31.10.81

(51) Int. Cl.⁴: **E 04 F 15/10**

(54) Verfahren zur Herstellung eines mehrfarbigen Fussbodenbelages.

(30) Priorität: **14.04.81 DE 3115034**

(43) Veröffentlichungstag der Anmeldung:
**20.10.82 Patentblatt 82/42**

(45) Bekanntmachung des Hinweises auf die Patenterteilung:
**06.02.85 Patentblatt 85/6**

(84) Benannte Vertragsstaaten:
**BE CH FR GB IT LI NL SE**

(56) Entgegenhaltungen:
**DE - A - 1 683 576**
**DE - A - 2 103 262**

(73) Patentinhaber: **Firma Carl Freudenberg, Höhnerweg 2, D-6940 Weinheim/Bergstrasse (DE)**

(72) Erfinder: **Heckel, Klaus, Dr., Akazienweg 26, D-6940 Weinheim (DE)**
Erfinder: **Graab, Gerhard, Dr., Laurentiusstrasse 7, D-6800 Mannheim (DE)**
Erfinder: **Kühl, Hans-Michael, Tilsiter Strasse 34, D-6940 Hemsbach (DE)**

(74) Vertreter: **Weissenfeld-Richters, Helga, Dr., Höhnerweg 2, D-6940 Weinheim/Bergstrasse (DE)**

## Beschreibung

Die Erfindung betrifft ein Verfahren zur Herstellung eines Fussbodenbelages mit einer die Oberschicht in musterartig verteilten Flächenbereichen durchdringenden, kontinuierlichen Unterschicht aus einem polymeren Werkstoff, bei dem die Ober- und die Unterschicht verpresst und einstückig verbunden werden und bei dem die Oberschicht in den genannten Flächenbereichen entfernt wird.

Ein solches Verfahren wird in DE-A 21 03 262 beschrieben. Dabei wird auf die Unterschicht eine zunächst kontinuierlich ausgebildete Oberschicht aufgelegt und durch die Einwirkung der Schliesskraft während des Verpressens gemeinsam mit dieser in kegelstumpfförmige Vertiefungen der Pressenplatten ausgestülpt. Die Ausstülpungen bilden Erhebungen auf der Oberfläche des Fussbodenbelages. Sie ermöglichen es, die Oberschicht durch eine gezielte mechanische Bearbeitung jeweils vollständig zu entfernen, wodurch die kontrastfarbene Unterschicht sichtbar wird. Eine noch weitergehende mechanische Bearbeitung führt zu einer von Erhebungen freien, zweifarbigen Oberfläche, die jedoch Bearbeitungsspuren im Bereich der ursprünglichen Ausstülpungen aufweist. Der Bodenbelag neigt dadurch hier stärker zum Verschmutzen als in den übrigen Bereichen.

Bei einer Ausführung, bei der die Oberschicht und die Unterschicht aus einem polymeren Werkstoff bestehen, beispielsweise aus Gummi, weisen die nicht bearbeiteten Flächenbereiche im Gegensatz zu den bearbeiteten Flächenbereichen eine sogenannte Press- oder Vulkanisationshaut auf und dadurch eine abweichende Abriebbeständigkeit, die bei eintretendem Verschleiss zur Ausbildung nicht erwünschter Unegalitäten führt.

Die farbliche und die reliefartige Strukturierung der Oberfläche eines Fussbodenbelages dieser Art entsprechen verfahrensbedingt einander vollständig. Das ist insofern nicht befriedigend, als architektonische Gesichtspunkte häufig eine von einander unabhängige Auslegung erfordern, beispielsweise, wenn die Oberfläche des Fussbodenbelages ohne Beeinträchtigung der Rutschsicherheit oder der Befahrbarkeit im Hinblick auf eine Verwendung als Werbeträger in vorgegebener Weise farbig gemustert werden soll.

Der Erfindung liegt demzufolge die Aufgabe zugrunde, ein Verfahren der eingangs genannten Art derart weiter zu entwickeln, dass die angesprochenen Nachteile vermieden werden. Das Verfahren soll es bei guter Wirtschaftlichkeit insbesondere ermöglichen, die reliefartige und die farbliche Musterung der Oberflächenstruktur frei zu wählen. Daneben soll es das vorgeschlagene Verfahren ermöglichen, auf der Oberfläche eine Press- bzw. Vulkanisationshaut zu erzeugen, die die aus verschiedenfarbigen, polymeren Werkstoffen bestehenden Bereiche unabhängig von der jeweiligen farblichen Musterung als kontinuierlich ausgebildete Schicht abschliesst.

Diese Aufgabe wird erfindungsgemäss mit den kennzeichnenden Merkmalen des Patentanspruchs 1 gelöst. Auf vorteilhafte Ausgestaltungen nehmen die Unteransprüche Bezug.

Bei dem vorgeschlagenen Verfahren werden in einem ersten Arbeitsschritt zunächst die beiden Schichten hergestellt. Die untere Schicht besteht in jedem Falle aus einem unter den Bedingungen des Verpressens plastisch formbaren polymeren Werkstoff, beispielsweise aus unvernetztem Gummi oder Kunststoff. Ihre Dicke entspricht wenigstens derjenigen der Oberschicht. Vorzugsweise ist die Dicke jedoch grösser, um eine zusätzliche, allgemeine Aussteifung zu erhalten, und beträgt beispielsweise das zwei- bis dreifache derjenigen der Oberschicht.

Letztere kann aus jedem beliebigen Werkstoff bestehen, der seiner Art nach geeignet ist, eine feste Bindung mit dem Werkstoff der Unterschicht einzugehen. Die Oberschicht kann beispielsweise aus Metall, Holz, Textil, einem unvernetzten Gummi oder Kunststoff bestehen. Sofern unter den Bedingungen des Verpressens eine Erweichung eintritt, ist lediglich zu beachten, dass die Fliessviskosität grösser ist als die Fliessviskosität des gleichzeitig erweichenden Werkstoffes der Unterschicht. Hierdurch wird eine gute Konturenschärfe zwischen den verschiedenfarbigen Bereichen erhalten. Die angesprochene Fliessviskosität wird bei gummielastischen Werkstoffen als Mooney-Viskosität bezeichnet.

Eine entsprechende Abstimmung der Fliessviskosität lässt sich durch Auswahl entsprechend verschiedener Werkstoffe für die Unter- und die Oberschicht erzielen. Die Unterschicht kann beispielsweise aus einem gummielastischen Werkstoff bestehen, die Oberschicht aus einem thermoplastischen Werkstoff. Besonders geeignet sind Polyester und Polyamid, wobei sowohl Folien als auch Gewebe, Gewirke oder Vliesstoffe zur Anwendung gelangen können. Es ist im Einzelfalle lediglich zu prüfen, ob eine ausreichend stabile Haftung erzielbar ist, und diese lässt sich gegebenenfalls verbessern durch Einbringung einer Schicht aus einem Haftvermittler, beispielsweise aus einem Polyurethankleber, einem Polychloroprenkleber, einem Resorcin-Formaldehyd-Latex oder Chlor-Kautschuk-Lösung. Bei offenmaschigen Schichten, beispielsweise einem Gewebe oder einem Vliesstoff, verhindert eine derartige Schicht zugleich das Eindringen des während der Vulkanisation erweichenden gummielastischen Werkstoffes in die Poren der Oberschicht.

Sofern die Unter- und die Oberschicht aus artverwandten Werkstoffen hergestellt werden sollen, beispielsweise aus einem gummielastischen Werkstoff, lässt sich eine Erhöhung der Fliessviskosität unter den Bedingungen des Verpressens in der Oberschicht erzielen durch Einmischung eines relativ grösseren Gehaltes eines mineralischen Füllstoffes. Im gleichen Sinne lässt sich die Fliessviskosität der Unterschicht erniedrigen durch Verwendung bzw. durch Einmischung eines copolymeren Werkstoffes mit besonders niedriger Fliessviskosität bzw. durch Verwendung eines andersartigen, speziellen Vulkanisiermittels.

Es ist auch möglich, die Ober- und die Unterschicht aus identischen gummielastischen Werkstoffen herzustellen, wenn die Oberschicht anvulkanisiert und dadurch an einem synchronen Erweichen während des gemeinsamen Verpressens mit der Unterschicht gehindert wird.

Die als Durchbrechungen ausgebildeten Aussparungen der Oberschicht können auf jede beliebige Weise angebracht werden, beispielsweise durch Stanzen, Schneiden oder Bohren. Dabei ist im Hinblick auf eine gute Konturenschärfe der farblichen Musterung grösster Wert darauf zu legen, dass die bei einer solchen mechanischen Bearbeitung entstehenden Grate und andere lose Bestandteile sorgfältig entfernt werden. Zweckmässigerweise wird die Oberschicht ausserdem so auf die Unterschicht aufgelegt, dass die Gratseite dieser zugewandt ist. Nicht erkannte Restbestandteile von Graten haben hierdurch einen grösseren Abstand von der eigentlichen Nutzfläche, und sind dadurch im fertigen Bodenbelag nicht unmittelbar sichtbar.

Die Begrenzungsflächen der Aussparungen sind den Deckflächen der Oberschicht senkrecht zugeordnet, um eine Veränderung des farblichen Gesamteindrucks nach eingetretenem Verschleiss auszuschliessen. Das Profil als solches ist frei wählbar, und kann jede beliebige Gestalt haben, soweit nicht die Eigenfestigkeit der Oberschicht beeinträchtigt wird. Neben runden und polygonförmigen Profilen kommen jedoch bevorzugt Piktogramme zur Anwendung, die Werbe- oder Hinweischarakter haben können. Durch ihre Anwendung lassen sich beispielsweise die verschiedenen Abteilungen eines Kaufhauses oder Wege und Verkehrsflächen dauerhaft und einprägsam kennzeichnen.

Eine grössere Variationsbreite hinsichtlich der farblichen Musterungsmöglichkeiten ergibt sich, wenn vor dem Verpressen farblich abweichende Körper aus einem artverwandten polymeren Werkstoff in die Unterschicht bzw. in die Oberschicht eingebracht werden, was beispielsweise durch einfaches Aufstreuen und Einkalandrieren in die Oberfläche erfolgen kann. Die Körper werden dabei so deformiert, dass sich eine vollkommen glattflächige Oberfläche ergibt, in der die aneinandergrenzenden Oberflächenzonen homogen ineinander übergehen. Der farbliche Gesamteindruck lässt sich durch eine entsprechende Massnahme wesentlich beeinflussen.

Ober- und Unterschicht werden anschliessend aufeinander gelegt, und in einem Formwerkzeug derart miteinander verpresst, dass die Unterschicht die Aussparungen der Oberschicht vollständig ausfüllt. Die Temperatursteuerung wird dabei so vorgenommen, dass sich die gewünschte gegenseitige Verbindung und Verfestigung der Werkstoffe beider Schichten ergibt. Das bedeutet, dass sich bei Verwendung thermoplastisch formbarer Substanzen für die Herstellung der beiden Schichten an eine anfängliche Heizphase eine Kühlphase anschliessen kann, während bei Verwendung vulkanisierbarer Substanzen im allgemeinen eine einfache Beheizung auf Vulkanisationstemperatur genügt. Diese kann in Abhängigkeit vom jeweils eingesetzten Werkstoff in sehr weiten Grenzen variieren und beträgt bevorzugt 150 bis 190°C. Eine kontinuierliche Arbeitsweise mit einem Bandkalander ist ebenfalls möglich.

Die senkrecht gegeneinander gepressten Platten des Formwerkzeuges können glatt und ebenflächig ausgebildet sein, was zur Erzeugung eines Fussbodenbelages führt, dessen Ober- und Unterseite vollkommen glatt und ebenflächig ist. Solche Bodenbeläge zeichnen sich durch eine besonders grosse Widerstandsfähigkeit gegenüber mechanischen Belastungen aus.

Durch Verwendung einer oberen Pressplatte mit einer reliefartigen Strukturierung lässt sich die Rutschsicherheit des erzeugten Fussbodenbelages verbessern, was häufig erwünscht ist bzw. notwendig ist, beispielsweise bei einer Verlegung im Nassbereich.

Durch eine entsprechend erzeugte Strukturierung der Unterseite lässt sich die Sicherheit der Verankerung nach der Verlegung verbessern. Wenn das hier gebildete Relief aus einer Vielzahl von dicht nebeneinanderliegenden Säulen gebildet wird, ergibt sich ausserdem eine Verbesserung der Trittelastizität und der Trittschalldämpfung bei Verwendung einer Unterschicht aus einem gummielastischen Werkstoff.

Nachfolgend wird der Gegenstand der vorliegenden Erfindung anhand eines Beispieles weiter verdeutlicht:

*Beispiel 1*

Eine Gummimischung, bestehend aus der Rezeptur A wird in einem Innenmischer homogenisiert. Die Mischung wird anschliessend auf einen Kalander gegeben und zu einer Folie mit einer Dicke von 0,5 bis 1 mm ausgewalzt. Die Folie wird aufgewickelt und anschliessend in einen Bandkalander überführt, in dem sie bei einer Oberflächentemperatur von 180°C und einer Laufgeschwindigkeit von 80 m/h, d.h. einer Verweilzeit von ca. 3 Minuten, vorvulkanisiert wird. Die Folie wird anschliessend in zwei gleichbreite Bahnen geteilt und getrennt aufgewickelt.

In den Innenmischer werden die Komponenten der Rezeptur I eingegeben und nach vollständiger Homogenisierung der Mischung zu einer Folie mit einer Dicke von 1,5 bis 2 mm ausgewalzt.

Eine der beiden Folien der Zusammensetzung A wird in einem Rollenstanzwerkzeug mit sie ganz durchdringenden Aussparungen versehen. Diese sind zylindrisch begrenzt und haben bei einem gleichbleibenden Abstand in Längs- und Querrichtung von 20 mm einen Durchmesser von 15 mm. Die Folie bildet im Sinne des vorgeschlagenen Verfahrens die Oberschicht.

Die drei vorliegenden Folien werden anschliessend so aufeinander geschichtet, dass die Folie der Zusammensetzung I zwischen den beiden anderen Folien der Zusammensetzung A zu liegen kommt und in einen beheizten Bandkalander überführt. Die mit den Durchbrechungen versehene Folie ist der polierte Kalanderwalze zugewandt. Diese hat bei einer Oberflächentemperatur 180°C eine Laufgeschwindigkeit von 36 m/h, was einer Verweildauer des dreischichtigen Gebildes von 6 Minuten entspricht. Die drei Schichten werden während dieser Zeit vulkanisiert und untrennbar miteinander verbunden. Die Oberfläche zeichnet sich durch eine durchgehende, kontinuierliche Vulkanisationshaut aus, die lediglich farblich durch den in die Aussparungen eingepressten Werkstoff der Unterschicht unterbrochen ist. Ein gleichwertiges Ergebnis lässt sich erzielen, wenn anstelle der polierten Kalanderwalze eine solche verwendet wird, die eine waffelartige strukturierte Oberfläche aufweist oder ein entsprechendes Pressenwerkzeug.

|  | A | | I | |
|---|---|---|---|---|
| SBR-Kautschuk | 15 | % | 11,8 | % |
| Hochstyrolharz (65% Blockstyrol) | 2,4 | % | 5,6 | % |
| Kaolin | 60 | % | 59 | % |
| Kreide | 8,5 | % | 8,2 | % |
| Weichmacher | 1,7 | % | 3 | % |
| TiO$_2$ | 2,5 | % | 2,5 | % |
| Lithopone | 6,7 | % | 6,7 | % |
| ZnO | 0,7 | % | 0,7 | % |
| Stearinsäure | 0,35 | % | 0,35 | % |
| Triäthanolamin | 0,35 | % | 0,35 | % |
| Paraffin | 0,35 | % | 0,35 | % |
| Alterungsschutzmittel | 0,2 | % | 0,2 | % |
| 2-Mercaptobenzothiazol | 0,2 | % | 0,2 | % |
| Dibenzothiazyldisulfid | 0,2 | % | 0,2 | % |
| Schwefel | 0,85 | % | 0,85 | % |
|  | 100 | % | 100 | % |

Angaben in Prozent, bezogen auf das Gesamtgewicht der Mischung.

*Beispiel 2*

Ein Vergleichsmuster der Folie aus der Mischung I wird entsprechend den Angaben aus dem Beispiel 1 gelocht und auf die Oberseite der anvulkanisierten Folie aus der Mischung A aufgelegt. Die Unterseite wird wiederum mit einer Folie aus der Mischung I abgedeckt. Die übrige Verfahrensweise entspricht der in Beispiel 1 geschilderten. Aufgrund der Viskositätsunterschiede bei 170°C ergeben sich keine sauberen Oberflächen, d.h. die schlechter fliessende Mischung A füllt die durch Stanzen in der Oberschicht eingebrachten Öffnungen nicht aus, die Konturen der Aussparungen sind unsauber abgebildet.

*Beispiel 3*

Bei einem Muster gemäss Beispiel 1 wird die Oberschicht durch ein entsprechend gelochtes Gewebe aus Polyesterfasern ersetzt. Dieses hat bei einer Dicke von 2,4 mm ein Flächengewicht von 350 g/m$^2$ und ist rückseitig mit einer Schicht aus einem Resorcin-Formaldehyd-Latex versehen, um die Poren zu verschliessen und eine gute Haftung zu dem gummielastischen Werkstoff der Mittelschicht zu gewährleisten. Die übrigen Schichten, die gegenseitige Zuordnung und die Bedingungen der gemeinsamen Verpressung entsprechen den Angaben aus dem Beispiel 1. Der erhaltene Fussbodenbelag zeichnet sich aufgrund seiner textilen Oberflächenzonen durch ein ansprechendes Aussehen und eine gute Wärme- und Trittschalldämmung aus. Er ist mit Einkaufswagen gut befahrbar und besonders widerstandsfähig gegen grosse statische und dynamische Belastungen.

## Patentansprüche

1. Verfahren zur Herstellung eines Fussbodenbelages mit einer die Oberschicht in musterartig verteilten Flächenbereichen durchdringenden, kontinuierlichen Unterschicht aus einem polymeren Werkstoff, bei dem die Ober- und die Unterschicht verpresst und einstückig verbunden werden, und bei dem die Oberschicht in den genannten Flächenbereichen entfernt wird, dadurch gekennzeichnet, dass die Oberschicht aus einem Werkstoff hergestellt wird, der unter den Bedingungen des Verpressens eine niedrigere Fliessviskosität aufweist als der Werkstoff der Unterschicht, dass das Entfernen der Oberschicht in den genannten Flächenbereichen vor dem Verpressen mit der Unterschicht bewirkt wird, dass das Verpressen so vorgenommen wird, dass die Flächenbereiche ganz ausgefüllt werden, und dass verfestigt wird.

2. Verfahren nach Anspruch 1, dadurch gekennzeichnet, dass das Entfernen der Flächenbereiche durch Stanzen, Schneiden oder Bohren bewirkt wird.

3. Verfahren nach Anspruch 1 bis 2, dadurch gekennzeichnet, dass vor dem Verpressen farblich abweichende Körper aus einem artverwandten, polymeren Werkstoff in die Unter- und/oder Oberschicht eingebettet werden.

## Claims

1. A process for the manufacture of a floor covering having a continuous lower layer of a polymeric material, which lower layer penetrates the upper layer in surface zones distributed in a pattern, the upper and lower layers being pressed together and integrally bonded and the upper layer being removed in the said surface zones, characterised in that the upper layer is produced from a material which, under the conditions of pressing, has a lower flow viscosity than the material of construction of the lower layer, that the removal of the upper layer in the said surface zones is effected before the upper layer is pressed together with the lower layer and that the pressing together is effected in such a manner that the surface zones become completely filled, and that the material is then solidified.

2. A process according to claim 1, characterised in that the surface zones are removed by punching, cutting or drilling.

3. A process according to claim 1 or 2, characterised in that, before the layers are pressed together, bodies of different colour but consisting of a polymeric material of a related type are embedded in the lower layer and/or in the upper layer.

## Revendications

1. Procédé pour la réalisation d'un revêtement de sol comportant une couche inférieure continue en une matière première polymère pénétrant dans la couche supérieure dans des zones superficielles réparties sous forme d'un dessin, procédé dans lequel la couche supérieure et la couche inférieure sont pressées et liées d'une seule pièce, tandis que la couche supérieure est enlevée dans les zones superficielles précitées, caractérisé en ce que la couche supérieure est réalisée en une matière première qui, dans les conditions du pressage, a une viscosité d'écoulement inférieure à celle de la matière première de la couche inférieure, l'enlèvement de la couche supérieure dans les zones superficielles précitées est effectué avant le pressage avec la couche inférieure, tandis que le pressage est effectué de telle sorte que les zones superficielles soient complètement remplies, après quoi on procède à la consolidation.

2. Procédé suivant la revendication 1, caractérisé en ce que l'enlèvement des zones superficielles a lieu par estampage, découpage ou forage.

3. Procédé suivant les revendications 1 et 2, caractérisé en ce que, avant le pressage, on enrobe, dans la couche inférieure et/ou dans la couche supérieure, des corps de couleurs différentes en une matière première polymère d'une nature apparentée.